# EUROPÄISCHE PATENTANMELDUNG

(11) **EP 2 955 093 A1**
(43) Veröffentlichungstag der Anmeldung: **16.12.2015**
(21) Anmeldenummer: 15164179.2
(22) Anmeldetag: 20.04.2015
(51) Int. Cl.: B62M 6/40, B62M 6/45, B62J 6/06, B62J 99/00, H02J 7/14

(54) **LICHTANLAGE UND VERFAHREN ZUM BETRIEB EINES AKKUMULATORS EINES PER MUSKELKRAFT ANTREIBBAREN FORTBEWEGUNGSMITTELS**

(30) Priorität: 11.06.2014 DE 102014211089
(71) Anmelder: ROBERT BOSCH GMBH, 70442 Stuttgart (DE)
(72) Erfinder: Franzen, Andreas, 81543 Muenchen (DE)

(57) **Zusammenfassung**

Es werden ein Fortbewegungsmittel und ein Verfahren zum Betreiben eines Akkumulators (6) eines per Muskelkraft antreibbaren Fortbewegungsmittel (10) vorgeschlagen..

Das Fortbewegungsmittel umfasst wenigstens einen Akkumulator (6), einen Dynamo (2), und einen Sensor (1) zur Erfassung eines Betriebszustands des Fortbewegungsmittels (10). Das Verfahren umfasst wenigstens die Schritte Erfassung eines Ladezustands des Akkumulators (6), und Erfassung des Betriebszustands des Fortbewegungsmittels (10), und Aktivierung des Dynamos (2) zur Beladung des Akkumulators (6) in Abhängigkeit von dem Ladezustand und dem erfassten Betriebszustand aufweist, wobei bei der Aktivierung des Dynamos (2) wenigstens ein Teil der durch den Dynamo (2) erzeugten elektrischen Energie zur Beladung des Akkumulators (6) verwendet wird.

## Beschreibung

### Stand der Technik

Die vorliegende Erfindung betrifft ein per Muskelkraft antreibbares Fortbewegungsmittel sowie ein Verfahren zum Betrieb eines Akkumulators, insbesondere der Lichtanlage, eines per Muskelkraft antreibbaren Fortbewegungsmittels. Insbesondere betrifft die vorliegende Erfindung die Erhöhung eines Anwenderkomforts beim Verwenden des Fortbewegungsmittels.

Zur Erhöhung der Fahrsicherheit ist für Fahrzeuge unterschiedlicher Gattungen eine Außenbeleuchtung (Lichtanlage) in vielen Jurisdiktionen Pflicht. Bekannte Beleuchtungssysteme umfassen häufig einen Dynamo (z.B. einen permanent mitdrehenden Dynamo, "Nabendynamo") oder einen manuell zuschaltbaren Dynamo (Felgendynamo) und eine Beleuchtungseinheit (Leuchtmittel). Solche Systeme liefern ihre volle Lichtleistung, sofern der Dynamo (auch "Lichtmaschine") aktiv geschaltet ist, wobei das Aktivieren des Dynamos elektronisch bzw. elektrisch über einen Schalter im Falle des Nabendynamos oder mechanisch durch Anlegen des Dynamotriebs an die Felge im Falle des Felgendynamos erfolgt. Auch andere Anwendungen können auf die Energie aus dem Akkumulator zugreifen. Eine Standlichtfunktion kann optional über Energiespeicher mit vergleichsweise geringer Kapazität (wie z.B. Kondensatoren) oder höherer Kapazität (wie z.B. Akkumulatoren) realisiert werden. Alternativ existieren ausschließlich akku-betriebene Lichtanlagen, welche auch oder grundsätzlich ohne Dynamo funktionieren. Sie werden über einen Schalter ein- oder ausgeschaltet. Bei Lichtanlagen und anderen Anwendungen, welche die elektrische Energie zumindest anteilig über einen Dynamo erzeugen, spürt der Anwender eine Erhöhung des Fahrwiderstands im Falle des Betriebs der Lichtanlage/der Anwendung, die durch den Antrieb des Dynamos als Generator entsteht. Es ist daher eine Aufgabe der vorliegenden Erfindung, die Spürbarkeit dieser Lasterhöhung für den Anwender zu verringern oder gänzlich zu vermeiden, um den Fahrkomfort zu verbessern.

### Offenbarung der Erfindung

Die vorstehend genannte Aufgabe wird erfindungsgemäß durch ein Verfahren zum Betreiben eines Akkumulators eines per Muskelkraft antreibbaren Fortbewegungsmittels gelöst. Zusätzlich wird ein per Muskelkraft antreibbares Fortbewegungsmittel vorgeschlagen. Das Fortbewegungsmittel umfasst einen Akkumulator, einen Dynamo zum Erzeugen elektrischer Energie und zum Laden des Akkumulators sowie einen Sensor zum Erfassen eines Betriebszustandes des Fortbewegungsmittels. Im Rahmen der vorliegenden Erfindung ist der Betriebszustand des Fortbewegungsmittels insbesondere daraufhin durch den Sensor zu untersuchen, ob der Anwender des Fortbewegungsmittels aktuell Muskelkraft zum Vortrieb des Fortbewegungsmittels aufwendet, oder ob dies nicht der Fall ist. Insbesondere wird über den Sensor erfasst, ob der Anwender (z.B. durch Betätigen einer Bremsanlage des Fortbewegungsmittels) bestrebt ist, die kinetische Energie des Fortbewegungsmittels abzubauen. Erfindungsgemäß wird ein Ladezustand des Akkumulators erfasst und mit (z.B. in einem Datenspeicher) gespeicherten Referenzen verglichen. Zusätzlich wird der Betriebszustand des Fortbewegungsmittels erfasst, welcher auch als "aktueller Betriebszustand" bezeichnet werden könnte. Auch der Betriebszustand kann anhand vordefinierter (z.B. in einem Datenspeicher) gespeicherter Referenzen klassifiziert werden. Anschließend wird der Dynamo in Abhängigkeit von dem aktuellen Ladezustand und dem erfassten Betriebszustand aktiviert, um den Akkumulator zu laden. Die Abhängigkeit von dem erfassten Betriebszustand kann beispielsweise derart sein, dass der erfasste Betriebszustand aktuell keinen Einsatz von Muskelkraft durch den Anwender umfasst. Insbesondere kann der aktuelle Betriebszustand durch den Einsatz einer Bremsanlage des Fortbewegungsmittels gekennzeichnet sein, so dass kinetische Energie des Fortbewegungsmittels aktuell überschüssig vorhanden ist. Der erfasste Ladezustand kann beispielsweise dahingehend gekennzeichnet sein, dass der Akkumulator nicht vollständig geladen ist. Mit anderen Worten bietet sich die Möglichkeit einer Energierückgewinnung und Abspeicherung der Energie in dem Akkumulator. Sofern die Möglichkeit einer Energierückgewinnung besteht, wird bei der Aktivierung des Dynamos wenigstens ein Teil der durch den Dynamo erzeugten elektrischen Energie zur Beladung des Akkumulators verwendet. Ein Aktivieren bedeutet somit im Rahmen der vorliegenden Erfindung eine Erhöhung der dem Dynamo entnommenen elektrischen Leistung. Auf diese Weise kann beispielsweise der Betrieb einer Lichtanlage des Fortbewegungsmittels energetisch "kostengünstig" aus überschüssiger kinetischer Energie des Fortbewegungsmittels bestritten werden.

Die Unteransprüche zeigen bevorzugte Weiterbildungen der Erfindung.

Wird zu einem späteren Zeitpunkt das Vorliegen eines zweiten vordefinierten Betriebszustandes des Fortbewegungsmittels erfasst und der zweite vordefinierte Betriebszustand insbesondere als ein solcher klassifiziert, in welchem Muskelkraft des Anwenders aufgewendet wird bzw. kinetische Energie des Fortbewegungsmittels nicht überschüssig vorhanden ist, wird in Abhängigkeit des Ladezustands des Akkumulators der Dynamo deaktiviert, um dem Anwender nicht zusätzliche mechanische Leistung abzuverlangen. Die Abhängigkeit von dem Ladezustand des Akkumulators kann jedoch auch derart bestehen, dass der Akkumulator trotz des Erfordernisses einer Aufwendung von Muskelkraft geladen wird. Dies kann beispielsweise erforderlich sein, um einen kritischen Ladezustand, welcher den Akkumulator beispielsweise langfristig schädigen kann, zu verlassen. Alternativ oder zusätzlich kann eine Abhängigkeit von dem Betriebszustand einer Lichtanlage des Fortbewegungsmittels vorgesehen werden, deren Betrieb in bestimmten Fahrsituationen sicherzustellen ist. Beispielsweise bei Dunkelheit ist unabhängig von dem Aufbringen von Muskelkraft bzw. dem Vorhandensein überschüssiger Energie das Leuchtmittel der Lichtanlage mit elektrischer Energie zu versorgen. Sofern der Akkumulator in einem zweiten vordefinierten Betriebszustand hinreichend elektrische Energie zum Betrieb des Leuchtmittels bereitstellen kann, ist diese Variante zur Vermeidung von Komforteinbußen für den Anwender zu bevorzugen. Sofern der Betrieb des Leuchtmittels in einem solchen Fall nicht allein durch die im Akkumulator gespeicherte Energie zu bestreiten ist, und gegebenenfalls zusätzlich der Akkumulator geladen werden muss, ist eine Fallunterscheidung vorzunehmen: Beispielsweise kann vorrangig der Betrieb des Leuchtmittels durch elektrische Energie aus dem Dynamo sichergestellt werden, so dass der Akkumulator elektrisch vom Dynamo sowie vom Leuchtmittel zu trennen ist, um die energetische Versorgung des Leuchtmittels sicherzustellen. Sofern der Dynamo hinreichend Leistung bereitstellen kann, um das Leuchtmittel parallel zur Ladung des Akkumulators zu betreiben, können sowohl der Akkumulator als auch das Leuchtmittel elektrisch mit dem Dynamo verbunden werden. Da die vom Leuchtmittel abzugebende Lichtleistung von Anwenderwünschen und anderen Umgebungsbedingungen abhängen kann, kann in Abhängigkeit der vorgenannten Umstände auch eine Steuerung der Energieflüsse vorgenommen werden, um die entsprechenden Vorgaben zu erfüllen. Beispielsweise kann der Anwender den Betrieb der Lichtanlage lediglich zu dem Zweck vorsehen, von anderen Verkehrsteilnehmern gesehen zu werden. In diesem Fall ist eine geringere elektrische Leistung für den Betrieb des Leuchtmittels erforderlich und ein entsprechendes Mehr an elektrischer Leistung kann dem Akkumulator zugeführt werden. Unter anderen Umständen und insbesondere in der Abwesenheit alternativer Straßenbeleuchtung oder beim Befahren eines Feldweges kann der Anwender bestrebt sein, die vor ihm liegende Fahrbahn mittels des Leuchtmittels zu erhellen, um Hindernisse rechtzeitig zu erkennen. In diesem Fall ist die Versorgung des Leuchtmittels mit mehr elektrischer Energie erforderlich, welche entsprechend nicht zur Ladung des Akkumulators bereitsteht. Entsprechend kann der Akkumulator (z.B. durch eine gepulste oder konstant in ihrem Pegel reduzierte elektrische Spannung) geladen werden. Entsprechend ist eine Steuerung der elektrischen Leistung zur Versorgung des Leuchtmittels durch eine reduzierte bzw. gepulste Spannung möglich.

Gemäß einem zweiten Aspekt der vorliegenden Erfindung wird ein per Muskelkraft antreibbares Fortbewegungsmittel vorgeschlagen, welches einen Akkumulator, einen Sensor zur Erfassung eines Betriebszustandes des Fortbewegungsmittels, einen Dynamo, einen Datenspeicher und eine Auswerteeinheit umfasst. Der Datenspeicher kann beispielsweise als elektrisches Netzwerk, als analoger Datenspeicher, als digitaler Datenspeicher, insbesondere als Flash-Speicher und/oder als nicht-flüchtiger Datenspeicher ausgestaltet sein. Die Auswerteeinheit kann beispielsweise einen programmierbaren Prozessor, insbesondere einen Mikrocontroller, einen Nanocontroller o.ä., umfassen. Über die Auswerteeinheit und den Sensor kann ein aktueller Betriebszustand des Fortbewegungsmittels erfasst und mit z.B. in dem Datenspeicher gespeicherten Referenzen verglichen werden. Entsprechend kann erkannt werden, ob der aktuelle Betriebszustand den Einsatz von Muskelkraft durch den Anwender erfordert oder ob kinetische Energie des Fortbewegungsmittels überschüssig vorhanden ist. Zudem kann die Auswerteeinheit einen Ladezustand des Akkumulators erfassen und den Dynamo zur Beladung des Akkumulators in Abhängigkeit von dem Ladezustand und dem erfassten Betriebszustand aktivieren. Die Erkennung des Ladezustandes kann beispielsweise innerhalb eines Mikrocontrollers der Auswerteeinheit oder durch einen externen Spannungssensor erfolgen. Bei der erfindungsgemäßen Aktivierung des Dynamos wird wenigstens ein Teil der durch den Dynamo erzeugten elektrischen Energie zur Beladung des Akkumulators verwendet. Dies ist insbesondere dann der Fall, wenn der Ladezustand des Akkumulators einen nicht vollständig geladenen Akkumulator anzeigt und überschüssig vorhandene kinetische Energie des Fortbewegungsmittels durch den detektierten Betriebszustand angezeigt wird. Auf diese Weise ist das Fortbewegungsmittel eingerichtet, die Merkmale, Merkmalskombinationen und die sich aus diesen ergebenden Vorteile des eingangs beschriebenen Verfahrens zu verwirklichen.

In dem Datenspeicher können beispielsweise Schwellenwerte vordefiniert sein, im Ansprechen auf das Unterschreiten bzw. Überschreiben welcher darüber entschieden wird, ob in einem jeweiligen Betriebszustand Muskelkraft zum Antreiben des Fortbewegungsmittels durch den Anwender aufzuwenden ist. Beispiele für solche Schwellenwerte können eine durch das Fortbewegungsmittel befahrene Neigung/Steigung, und/oder ein per Muskelkraft tatsächlich erbrachtes Antriebsmoment und/oder das Vorliegen eines Bremseingriffes sein. Die vorgenannten Beispiele für Schwellenwerte sind unterschiedlich zuverlässige Indikatoren dafür, dass das Fortbewegungsmittel überschüssige kinetische Energie bereithält bzw. das Erzeugen elektrischer Energie mit geringen Komforteinbußen für den Anwender möglich ist.

Auch ein Schaltsignal zum Einschalten einer Lichtanlage des Fortbewegungsmittels kann von der Auswerteeinheit bei der Steuerung der Energieflüsse des Fortbewegungsmittels berücksichtigt werden. Hierzu kann die Auswerteeinheit beispielsweise einen Befehl zum Betreiben der Lichtanlage selbst erhalten oder eine Zunahme eines Stromflusses durch das Leuchtmittel detektieren. Im Ansprechen darauf kann die Auswerteeinheit entscheiden, ob hinreichend Energie zum Laden des Akkumulators verfügbar ist oder ob die damit gegebenenfalls verbundenen Komforteinbußen zunächst nicht in Kauf genommen werden sollen. Beispielsweise kann ein Akkumulator, welcher in einem unkritischen Ladezustand ist, auch zu einem späteren Zeitpunkt geladen werden, in welchem elektrische Energie evtl. "kostengünstiger" bzw. "aufwandsärmer" erzeugbar ist.

In einem weiteren Schritt kann ein vordefinierter zweiter Fahrzustand erkannt bzw. entsprechend dem ersten Fahrzustand sensorisch erfasst und klassifiziert werden, im Ansprechen auf welchen die von dem Dynamo der Lichtanlage abgegebene elektrische Leistung automatisch verringert wird. Mit anderen Worten kann erkannt werden, dass im zweiten Fahrzustand gegenüber dem ersten Fahrzustand durch den Betrieb des Dynamos eine Komforteinbuße für den Anwender derart die Folge wäre, dass der Anwender zusätzliches Drehmoment zum Antrieb des Dynamos per Muskelkraft zu erzeugen hätte. Beispielsweise kann dabei erkannt werden, dass der Anwender "wieder in die Pedale tritt", wozu beispielsweise ein Trittfrequenzsensor verwendet werden kann. Entsprechend kann eine positive Steigung mittels eines ersten Sensors in Form eines Neigungssensors/Beschleunigungssensors erkannt werden, in welchem Fall der Anwender genötigt wird, zum Bezwingen der Steigung Muskelkraft aufzubringen. Alternativ oder zusätzlich kann auch ein Drehmomentsensor und/oder ein Kraftsensor im Bereich der Pedalerie des Fortbewegungsmittels verwendet werden, um die Tatsache zu detektieren, dass der Anwender durch den Einsatz von Muskelkraft die Geschwindigkeit des Fortbewegungsmittels zu erhöhen sucht. Da in den vorgenannten Betriebszuständen zumindest die theoretische Möglichkeit besteht, dass der Anwender die Erhöhung des ihm abverlangten Drehmoments spürt, kann die von dem Dynamo abgegebene elektrische Leistung automatisch verringert werden, um den Anwenderkomfort beim Betrieb des Fortbewegungsmittels zu erhöhen.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Übersicht über Komponenten eines Ausführungsbeispiels eines erfindungsgemäßen Fortbewegungsmittels;
- Figur 2: ein schematischer Schaltplan zu den in Figur 1 vorgestellten Komponenten; und
- Figur 3: ein Flussdiagramm veranschaulichend Schritte eines Ausführungsbeispiels eines erfindungsgemäßen Verfahrens.

### Ausführungsformen der Erfindung

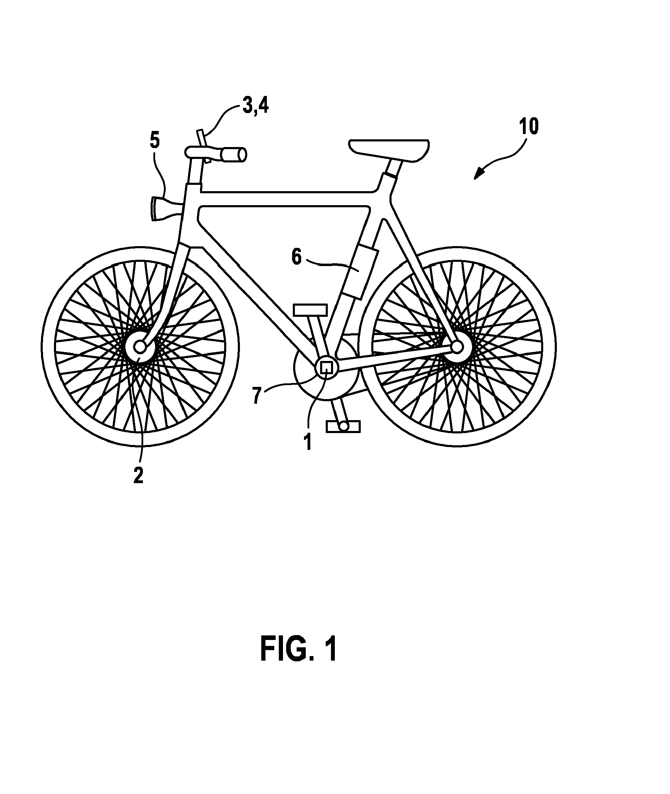

Figur 1 zeigt ein Fahrrad 10 als per Muskelkraft antreibbares Fortbewegungsmittel. Im Bereich des Tretlagers 7 ist ein erster Sensor 1 zur Erfassung einer Trittfrequenz eines Drehmomentes, einer Pedalkraft und einer Beschleunigung vorgesehen. Ein Akkumulator 6 dient als elektrischer Energiespeicher zur Versorgung der Lichtanlage. Die Lichtanlage des Fahrrades 10 umfasst neben dem ersten Sensor 1 einen Nabendynamo 2 im Vorderrad sowie eine Lampe 5 als Leuchtmittel. Am Lenker des Fahrrades 10 ist eine Mensch-Maschine-Schnittstelle (MMS) vorgesehen, welche einen Datenspeicher 3 und einen programmierbaren Prozessor 4 als Auswerteeinheit umfasst. Sofern der Anwender bzw. ein (nicht dargestellter) Lichtsensor die Lampe 5 aktiviert, wird zunächst Energie aus dem Akkumulator 6 zum Betrieb der Lampe 5 verwendet. Ermittelt und erkennt bzw. klassifiziert der programmierbare Prozessor 4 einen ersten Fahrzustand des Fahrrades 10, in welchem der Anwender keine Muskelkraft aufbringt und/oder mechanische Energie (aufgrund einer Bergabfahrt bzw. aufgrund eines Bremsvorgangs) als überschüssig anzunehmen ist, schaltet der programmierbare Prozessor 4 den Nabendynamo 2 ein, um die Lampe 5 zu betreiben und gegebenenfalls überschüssige elektrische Energie in den Akkumulator 5 zu speichern.

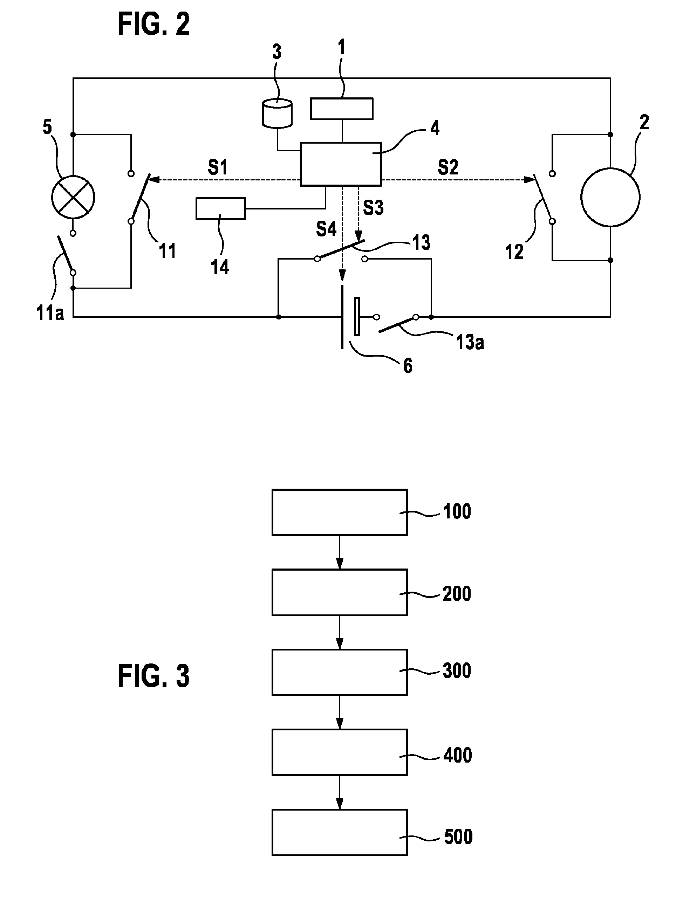

Figur 2 zeigt einen schematischen Schaltplan eines Ausführungsbeispiels einer erfindungsgemäßen Lichtanlage. Eine Lampe 5, ein Dynamo 2 und ein Akkumulator 6 liegen elektrisch in einer gemeinsamen Masche. Sie sind über jeweilige Schalter 11, 11a, 12, 13, 13a im Ansprechen auf ein Signal eines programmierbaren Prozessors 4 als Auswerteeinheit überbrückbar. Zum wahlweisen Überbrücken bzw. Kurzschließen weist der programmierbare Prozessor 4 jeweilige Steuerleitungen S1, S2, S3 zu den Schaltern 11, 11a, 12, 13, 13a auf. Zusätzlich weist der programmierbare Prozessor 4 eine Sensorleitung S4 zum Akkumulator 6 auf, mit Hilfe welcher er dessen Ladezustand und Klemmenspannung erfassen kann. Zur Erfassung aktueller Fahrzustände ist der programmierbare Prozessor 4 kommunikationstechnisch mit einem ersten Sensor 1 verbunden, der aufgrund seiner permanenten Exposition durch die Gravitation auch als Neigungssensor bezeichnet werden kann. Die Beurteilung ("Klassifikation") der aktuellen Fahrzustände erfolgt mittels in einem Datenspeicher 3 abgelegter Referenzwerte, auf welche der programmierbare Prozessor 4 zugreifen kann. Die Lampe 5 kann als LED oder alternativ als Glühlampe ausgestaltet sein. Die Schalter 11 können optional auch manuell geschaltet werden. Ein Lichtsensor 14 kann alternativ oder zusätzlich Einfluss auf den Schaltzustand der Schalter 11, 11 a nehmen. Hierzu ist der Lichtsensor 14 ebenfalls an den programmierbaren Prozessor 4 angeschlossen. Der Akkumulator 6 kann vorzugsweise auf Lithium-Ionen- und/oder Lithium-Polymere-Basis ausgeführt sein und optional einen Ladeanschluss über ein Netzteil oder einen USB-Anschluss aufweisen.

Nachfolgend werden einzelne Betriebszustände zur Veranschaulichung diskutiert. Hierbei können weitere Sensoren (zusätzlich zum Beschleunigungs-/Neigungssensor) in Form von Nabendrehzahlsensoren, Trittfrequenzsensoren, Drehmomentsensoren, Kraftsensoren, zur Erfassung des Fahrzustandes (positive/negative/keine Beschleunigung bzw. Bergabfahrt, Bergauffahrt, Bremsen, Fahrt in der Ebene) verwendet werden. Zudem kann die Rekuperationsfunktion mittels eines manuellen oder mittels eines elektronischen Schalters durch den Anwender des Fortbewegungsmittels abgeschaltet werden (beispielsweise durch einen Bypass des Akkumulators).

### Erster Anwendungsfall: Rekuperation "ein"

Zunächst wird angenommen, dass der Akkumulator 6 einen Grundladezustand aufweist, welcher über den programmierbaren Prozessor 4 registriert wird.

### a) Randbedingung "Lampe ein":

In diesem Fall wird die Lampe 5 über Strom aus dem Akkumulator 6 betrieben, sofern der erste Sensor 1 eine Fahrt in der Ebene (konstante Nabendrehzahl, keine Beschleunigung, Neigungswinkel ungefähr 0°) oder eine Bergauffahrt (Neigungswinkel größer 0°, Beschleunigung negativ) registriert. Registriert der erste Sensor 1 eine Bergabfahrt mit oder ohne Bremsvorgang (Neigungswinkel kleiner 0°, u.U. Nabendrehzahlerhöhung, Beschleunigung positiv) oder einen Bremsvorgang in der Ebene (Nabendrehzahlverringerung, Beschleunigung auf der Längsachse negativ, Neigungswinkel ungefähr 0°), wird über den programmierbaren Prozessor 4 der Dynamo 2 hinzugeschaltet, um den erzeugten Strom in den Akkumulator 6 einzuspeisen. Die Festlegungen der Neigungswinkel und Beschleunigungswerte, welche zu einem Zuschalten des Dynamos führen, hängen von der Größe der Lasterhöhung durch das Zuschalten des Dynamos (bzw. von der Leistung des Dynamos) ab und sind im Einzelfall anzupassen. Auch gegebenenfalls vorzusehende zeitliche Verzögerungen bis zum Zuschalten des Dynamos bei den jeweiligen Fahrzuständen sind im Einzelfall anzupassen. Je nach Auslegung der elektrischen Leistung der Lampe 5 im Verhältnis zur Nennleistung des Dynamos 2 erfolgt keine Stromentnahme aus dem Akkumulator 6 bzw. eine parallele Ladung des Akkumulators 6 ist möglich. Registriert der programmierbare Prozessor 4 die Unterschreitung eines vorbestimmten Ladezustands des Akkumulators 6, wird der Dynamo 2 unabhängig von den Signalen des ersten Sensors 1 und damit unabhängig vom Fahrzustand hinzugestaltet, um einen Betrieb der Lampe 5 sicherzustellen.

### b) Randbedingung "Lampe aus"

Sofern der erste Sensor 1 eine Fahrt in der Ebene (konstante Nabendrehzahl, Beschleunigung 0, Neigungswinkel ungefähr 0°) oder eine Bergauffahrt (Neigungswinkel positiv, Beschleunigung negativ) registriert, schaltet der programmierbare Prozessor 4 den Dynamo 2 aus (Freilauf, sofern der Ladezustand des Akkumulators 6 ausreichend hoch ist). Registriert der programmierbare Prozessor 4 die Unterschreitung des vorbestimmten Ladezustands des Akkumulators 6 bei Beginn der Fahrt, wird der Dynamo 2 unabhängig von den Signalen des ersten Sensors 1 und damit unabhängig von dem Fahrzustand hinzugeschaltet, und zwar solange, bis der minimale Ladezustand des Akkumulators 6 wieder erreicht bzw. unter Veranschlagung einer geeigneten Hysterese überschritten ist. Registriert der erste Sensor 1 eine Bergabfahrt mit oder ohne Bremsvorgang (Neigungswinkel a kleiner 0°, u.U. Nabendrehzahlerhöhung, Beschleunigung positiv) oder einen Bremsvorgang in der Ebene (Nabendrehzahlverringerung, Beschleunigung negativ) wird über den programmierbaren Prozessor 4 der Dynamo 2 hinzugeschaltet, um den erzeugten Strom in den Akkumulator 6 einzuspeisen (zu laden). Dazu müssen jeweils die Schalter 11 und 13a geschlossen und die Schalter 11a und 13 geöffnet werden, um unabhängig von der Lampe 5 eine Ladung des Akkumulators 6 zu ermöglichen.

### Fall 2: Rekuperation "aus"

### a) Randbedingung "Lampe ein"

Die Lampe 5 wird direkt mit Strom aus dem Dynamo 2 betrieben. Die Fallunterscheidung Bergauf/Bergab/Bremsen, etc., entfällt, da unabhängig von diesen eine permanente, für den Fahrer spürbare Lasterhöhung aufgrund des Drehmomentes des Dynamos 2 erfolgt.

### b) Randbedingung "Lampe aus"

In diesem Fall wird der Dynamo 2 nicht verwendet, so dass kein Aufladen des Akkumulators 6 erfolgt.

Figur 3 zeigt die Schritte eines Ausführungsbeispiels eines erfindungsgemäßen Verfahrens zum Betrieb eines Akkumulators eines per Muskelkraft antreibbaren Fortbewegungsmittels. In Schritt 100 wird ein Ladezustand des Akkumulators erfasst. Hierbei können in einem Datenspeicher abgespeicherte Referenzwerte mit dem erfassten Ladezustand verglichen werden und der aktuelle Ladezustand des Akkumulators anhand dieser klassifiziert werden. In einem Schritt 200 wird ein aktueller Betriebszustand des Fortbewegungsmittels erfasst. Auch der Betriebszustand kann anhand in einem Datenspeicher hinterlegter Referenzen klassifiziert werden. In Schritt 300 wird in Abhängigkeit der vorgenannten Schritte der Dynamo des Fortbewegungsmittels zur Beladung des Akkumulators aktiviert. Ist der Betriebszustand des Fortbewegungsmittels ein solcher, in welchen kinetische Energie des Fortbewegungsmittels überschüssig vorhanden ist, und der Ladezustand des Akkumulators derart, dass eine Ladung möglich ist, wird bei der Aktivierung des Dynamos wenigstens ein Teil der durch den Dynamo erzeugten elektrischen Energie zur Beladung des Akkumulators verwendet. In Schritt 400 wird ein anderer (zweiter) vordefinierter Betriebszustand des Fortbewegungsmittels erfasst und beispielsweise anhand abgespeicherter Referenzen dahingehend klassifiziert, dass nun kinetische Energie nicht überschüssig vorhanden ist. Dies kann beispielsweise dadurch erkannt werden, dass der Anwender des Fortbewegungsmittels Muskelkraft aufbringt. In Schritt 500 wird im Ansprechen darauf der Dynamo deaktiviert, sofern der Ladezustand des Akkumulators unkritisch ist. Auf diese Weise wird verhindert, dass der Anwender Komforteinbußen bei der Erzeugung elektrischer Energie hinzunehmen hat, sofern diese nicht dringend (zum Schutze des Akkumulators bzw. zur Sicherstellung der Fahrsicherheit) erforderlich ist.

## Patentansprüche

1. Verfahren zum Betreiben eines Akkumulators (6) eines per Muskelkraft antreibbaren Fortbewegungsmittels (10),
wobei das Fortbewegungsmittel (10) wenigstens
• einen Akkumulator (6),
• einen Dynamo (2), und
• einen Sensor (1) zur Erfassung eines Betriebszustands des Fortbewegungsmittels (10)
aufweist, und
wobei das Verfahren wenigstens die Schritte
• Erfassung (100) eines Ladezustands des Akkumulators (6), und
• Erfassung (200) des Betriebszustands des Fortbewegungsmittels (10), und
• Aktivierung (300) des Dynamos (2) zur Beladung des Akkumulators (6) in Abhängigkeit von dem Ladezustand und dem erfassten Betriebszustand
aufweist,
wobei bei der Aktivierung des Dynamos (2) wenigstens ein Teil der durch den Dynamo (2) erzeugten elektrischen Energie zur Beladung des Akkumulators (6) verwendet wird.

2. Verfahren nach Anspruch 1, wobei der erfasste Ladezustand des Akkumulators (6) eine nicht vollständige Ladung anzeigt.

3. Verfahren nach Anspruch 1 oder 2, wobei der Betriebszustand eine Fahrt bergab und/oder unter Verwendung einer Bremsanlage des Fortbewegungsmittels (10) umfasst.

4. Verfahren nach einem der vorstehenden Ansprüche weiter umfassend
• Erfassung (400) eines zweiten vordefinierten Betriebszustands des Fortbewegungsmittels (10), und
• Deaktivierung (500) des Dynamos (2) in Abhängigkeit von dem Ladezustand des Akkumulators (6) und dem erfassten zweiten Betriebszustand.

5. Verfahren nach Anspruch 4, wobei der zweite Betriebszustand eine Fahrt unter Aufwendung von Muskelkraft, insbesondere bergauf und bevorzugt ohne Verwendung einer Bremsanlage des Fortbewegungsmittels (10) umfasst.

6. Per Muskelkraft antreibbares Fortbewegungsmittel (10) umfassend
- einen Akkumulator (6),
- einen Sensor (1) zur Erfassung eines Betriebszustands des Fortbewegungsmittels (10),
- einen Dynamo (2),
- einen Datenspeicher (3), und
- eine Auswerteeinheit (4), wobei
die Auswerteeinheit (4) eingerichtet ist, einen Ladezustand des Akkumulators (6) zu erfassen anhand von Signalen des Sensors (1) einen aktuellen Betriebszustand des Fortbewegungsmittels (10) zu erfassen und den Dynamo (2) zur Beladung des Akkumulators (6) in Abhängigkeit von dem Ladezustand und dem erfassten Betriebszustand zu aktivieren, wobei bei der Aktivierung des Dynamos (2) wenigstens ein Teil der durch den Dynamo (2) erzeugten elektrischen Energie zur Beladung des Akkumulators (6) verwendet wird.

7. Fortbewegungsmittel nach Anspruch 6, in welchem insbesondere ein Verfahren nach einem der Ansprüche 1 bis 5 abläuft, wobei der aktuelle Betriebszustand durch ein Unterschreiten eines vordefinierten Schwellenwertes für
- eine durch das Fortbewegungsmittel (10) befahrene Neigung, und/oder
- ein per Muskelkraft erbrachtes Antriebsmoment, und/oder
- einen Bremseingriff
vordefiniert ist.

8. Fortbewegungsmittel nach einem der Ansprüche 6 oder 7, wobei der erfasste Ladezustand des Akkumulators (6) eine nicht vollständige Ladung anzeigt.

9. Fortbewegungsmittel nach einem der Ansprüche 6 bis 8, wobei die Auswerteeinheit (4) eingerichtet ist, ein Signal zum Einschalten einer Lichtanlage zu erhalten und im Ansprechen darauf bei der Aktivierung des Dynamos (2) wenigstens einen Teil der durch den Dynamo (2) erzeugten elektrischen Energie an die Lichtanlage des Fortbewegungsmittels (10) zu leiten.

10. Fortbewegungsmittel nach einem der Ansprüche 6 bis 9, wobei die Auswerteeinheit (4) eingerichtet ist, ein Signal zum Einschalten einer Lichtanlage zu erhalten und in dem Falle, dass der Akkumulator (6) einen Ladezustand unterhalb eines vordefinierten Schwellenwertes aufweist, keine durch den Dynamo (2) erzeugte elektrische Energie an den Akkumulator zu leiten, um den Betrieb der Lichtanlage des Fortbewegungsmittels (10) sicherzustellen.
